# EUROPEAN PATENT APPLICATION

(11) **EP 4 764 638 A1**
(43) Date of publication of application: **24.06.2026**
(21) Application number: 24866941.8
(22) Date of filing: 12.06.2024
(51) Int. Cl.: G02B 6/38, G02B 6/42

(54) **POF FEMALE CONNECTOR**

(30) Priority: 21.09.2023 CN 202311230389
(71) Applicant: Dongguan Yudim Automotive Technology Co., Ltd, Dongguan, Guangdong 523000 (CN)
(72) Inventor: ZHANG, Xiufeng, Dongguan, Guangdong 523000 (CN); HAO, Huan, Dongguan, Guangdong 523000 (CN); SHUI, Jiangtao, Dongguan, Guangdong 523000 (CN); ZHU, Liang, Dongguan, Guangdong 523000 (CN); HUANG, Yongsheng, Dongguan, Guangdong 523000 (CN)
(74) Representative: De Arpe Tejero, Manuel
(86) International application number: PCT/CN2024/098622
(87) International publication number: WO 2025/060521

(57) **Abstract**

A POF female connector (100), comprising: an insulating base (1), which has a mating slot (12) for mating with a POF male connector (200) and a mounting position (11) communicated with the mating slot (12); and a lens module (300), which is mounted in the mounting position (11), the lens module (300) comprising a plastic optical fiber lens (2), input ends (221) of a lens body (22) of the plastic optical fiber lens (2) being exposed in the mating slot (12), and output ends (222) of the lens body (22) being exposed at the lower end of the insulating base (1). The insulating base (1) is mounted on a PCB (4), and the output ends (222) of the lens body (22) abut against an optical fiber chip (41) mounted on the PCB (4). The optical fiber chip (41) is not provided, such that no additional structure is required to fix the optical fiber chip (41); the structure is relatively simple in that the lens body (22) of the plastic optical fiber lens (2) abuts against the optical fiber chip (41) and transmits an optical signal to the optical fiber chip (41), and finally the optical signal is received by the optical fiber chip (41), such that the present invention is particularly suitable for scenarios where the optical fiber chip (41) has been soldered and fixed on the PCB (4), and only transmission of optical signals is needed.

## Description

### TECHNICAL FIELD

The present disclosure relates to the technical field of connectors, and particularly relates to a plastic optical fiber (POF) female connector.

### BACKGROUND

With the continuous development of optical fiber communication technologies, increasing requirements are imposed on supporting optical fibers, optical cables and connectors.

The plastic optical fiber (POF) is a type of optical fiber (light-guide fiber) using a highly transparent polymer such as polystyrene (PS), polymethyl methacrylate (PMMA) or polycarbonate (PC) as a core material, and using the PMMA, fluoroplastic, or another material as a cladding material. As an alternative to a silica fiber, the plastic optical fiber is a type of data transmission medium low in cost, light in weight, and easy to mount and use. It is especially suitable for short-distance systems (such as an access network) with medium and small capacities and many connectors. Compared with a multimode silica fiber, the plastic optical fiber is more flexible, features better mechanical ductility and dust resistance, and is easier to mount and maintain. More importantly, a core diameter of the POF is generally 0.5 mm or above, while a core diameter of a multimode silica fiber is 62.5 µm or 50 µm. With the core diameter about 10 times greater, the POF enables easy alignment during connection. For a step-index POF having a core diameter of 980 µm and a graded-index POF having a core diameter of 500 µm, an alignment deviation of ±30 µm during connection will not seriously affect coupling loss (with a loss increase of only about 0.03 dB). In this way, cheap injection-molded connectors can be used, thus significantly reducing the overall system cost. The plastic optical fiber has been widely used in civil fields such as power, medical care, and automotive industries.

The Chinese invention patent (CN205562890U) disclosed a plastic optical fiber socket structure. The structure includes a plastic optical fiber socket including two recesses and optical fiber holes located in the recesses, respectively. Lower side walls of the recesses are each provided with a notch, left and right side surfaces of the recesses are each provided with a clamping groove, and bottoms of the recesses are provided with fixing snap positions. The structure further includes an optical fiber chip including a main body and pins. The main body includes an optical fiber chip receiving port accommodated in the recesses. The pins extend out by passing through the notches of the recesses. In addition, the structure includes a plastic optical fiber cover plate, two sides of which are each provided with a snap fixed in the clamping groove. In this way, a front end surface of the plastic optical fiber cover plate abuts against the main body of the optical fiber chip. Moreover, the structure also includes a printed circuit board (PCB) provided with fixing holes for fixing the fixing snap positions and welding holes for welding connection to the pins; a plastic optical fiber cable penetrating through the optical fiber holes to be connected to the optical fiber chip receiving port; and a plastic optical fiber handle for fixing the plastic optical fiber cable to the plastic optical fiber socket.

However, the plastic optical fiber socket structure directly uses the plastic optical fiber socket to cooperate with the plastic optical fiber cover plate to fix the optical fiber chip, and the pins of the optical fiber chip are welded and fixed to the PCB. That is, the plastic optical fiber socket structure is inherently integrated with the optical fiber chip and requires an additional structure to fix the optical fiber chip. This results in a complicated structure and makes it unsuitable for the scene where the optical fiber chip is welded and fixed to the PCB and only transmission of optical signals is required.

In view of that, the inventor provides the following technical solution.

### SUMMARY

An objective of the present disclosure is to overcome defects in the prior art, and provide a plastic optical fiber (POF) female connector.

To solve the above technical problems, the present disclosure uses the following technical solution: The POF female connector includes an insulating seat provided with a mating slot into which a POF male connector is plugged and a mounting position in communication with the mating slot; and a lens module mounted in the mounting position. The lens module includes a plastic optical fiber lens. Input ends of lens bodies of the plastic optical fiber lens are exposed in the mating slot, and output ends of the lens bodies are exposed at a lower end of the insulating seat. The insulating seat is mounted on a printed circuit board (PCB). The output ends of the lens bodies are coupled to an optical fiber chip mounted on the PCB.

Further, in the above technical solution, the lens module further includes a support. The plastic optical fiber lens is fixed in the support. An outer side of the support is provided with an inverted snap. An inner wall of the mounting position is provided with a snap hole. The inverted snap is snapped into the snap hole and is vertically movable relative to the snap hole. A metal elastic sheet is further arranged between the support and the mounting position. The metal elastic sheet elastically supports the support relative to the insulating seat. The support is fixed in the mounting position in an elastically floatable manner.

Further, in the above technical solution, a lower end of the support is provided with a mounting groove. An upper end of the support is provided with coupling windows penetrating through the mounting groove. The plastic optical fiber lens is mounted in the mounting groove. The input ends of the plastic optical fiber lens are exposed in the coupling windows. The output ends of the plastic optical fiber lens are exposed to the outside.

Further, in the above technical solution, the metal elastic sheet is embedded in a limiting groove provided in the upper end of the support. A plurality of elastic arms protruding upward are formed on the metal elastic sheet. The elastic arms are in contact with a bottom surface of the mounting position.

Further, in the above technical solution, the mounting groove is further internally provided with a non-circular positioning snap. The plastic optical fiber lens is provided with a through second positioning hole. The positioning snap penetrates through the second positioning hole, to be positioned on the plastic optical fiber lens in a snap-fit manner.

Further, in the above technical solution, a plurality of pressing protrusions are further formed in the mounting groove. The pressing protrusions are pressed against a periphery of the plastic optical fiber lens, to limit the plastic optical fiber lens.

Further, in the above technical solution, the plastic optical fiber lens includes a base and the lens bodies integrally fixed to the base. Each of the lens bodies has one input end and one output end. The input ends correspond to the output ends.

Further, in the above technical solution, a lower end surface of the support is further provided with an avoidance groove for accommodating the optical fiber chip. The output ends of the plastic optical fiber lens are exposed in the avoidance groove.

Further, in the above technical solution, a plurality of positioning bosses are formed on a lower end surface of the insulating seat. Four corners of the insulating seat are provided with alignment grooves penetrating through the mounting position. Four corners of the support are all provided with alignment blocks. The alignment blocks are embedded in the alignment grooves.

Further, in the above technical solution, slit grooves, opened upward from bottom surfaces, of the positioning bosses divide the positioning bosses into first positioning columns and second positioning columns. Snap parts protruding outward are further formed on peripheries of lower ends of the second positioning columns.

Through the above technical solution, compared with the prior art, the present disclosure has the following beneficial effects:
1. The present disclosure is provided with no optical fiber chip, and no additional structure to fix the optical fiber chip is required. The present disclosure has a simple structure, only the lens bodies of the plastic optical fiber lens are coupled to the optical fiber chip, optical signals are transmitted to the optical fiber chip, and finally the optical fiber chip receives the optical signals. Moreover, the present disclosure is particularly suitable for the scene where the optical fiber chip is welded and fixed to the PCB and only transmission of the optical signals is required.
2. In the present disclosure, the support and the plastic optical fiber lens fixed to the support can elastically float relative to the insulating seat. Thus, in actual use, after the POF female connector of the present disclosure is fixedly mounted on the PCB, the plastic optical fiber lens is in elastic contact with the optical fiber chip on the PCB, thus avoiding formation of a gap between the plastic optical fiber lens and the optical fiber chip. In this way, optical signal transmission quality of the plastic optical fiber lens can be ensured. In addition, damage to the plastic optical fiber lens or the optical fiber chip due to rigid contact is prevented, and the service life and quality of a product are ensured.

### BRIEF DESCRIPTION OF THE DRAWINGS

FIG. 1 is a perspective view of the present disclosure from a first viewing angle;
FIG. 2 is a perspective view of the present disclosure from a second viewing angle;
FIG. 3 is a perspective exploded view of the present disclosure;
FIG. 4 is a perspective view of the present disclosure from a third viewing angle;
FIG. 5 is a perspective view of an insulating seat of the present disclosure;
FIG. 6 is an assembly diagram of a lens module of the present disclosure;
FIG. 7 is a perspective view of a support of the present disclosure;
FIG. 8 is a perspective view of the present disclosure coupled to an optical fiber chip; and
FIG. 9 is an assembly diagram of the present disclosure, a printed circuit board (PCB), and a plastic optical fiber (POF) male connector.

### DETAILED DESCRIPTION

The present disclosure will be further described below with reference to specific embodiments and accompanying drawings.

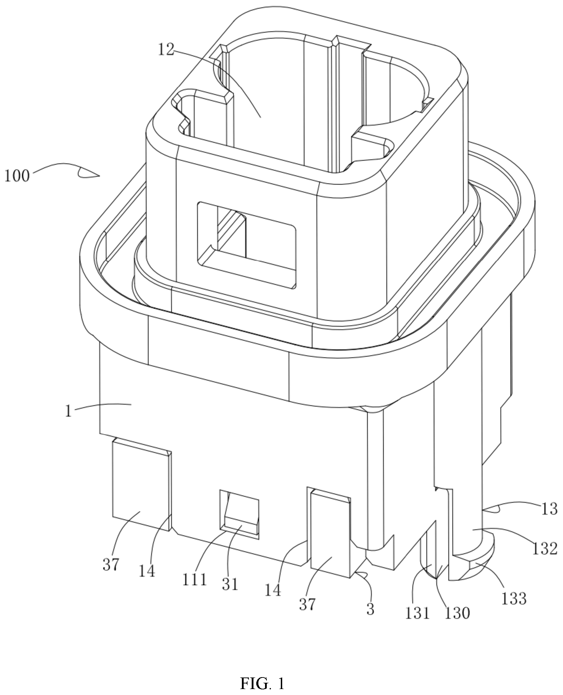

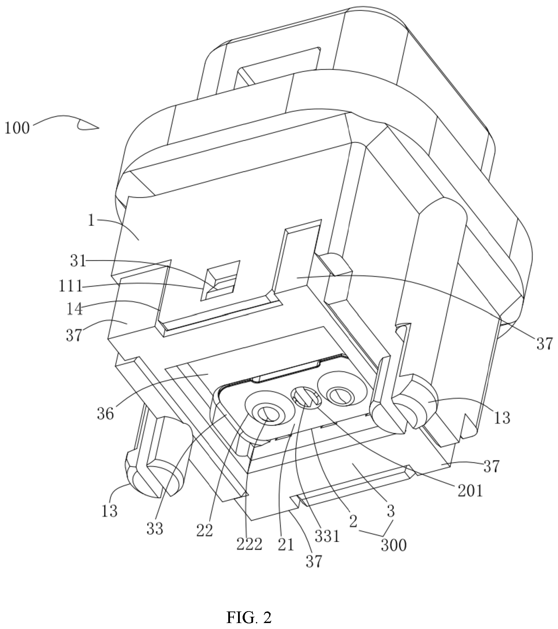

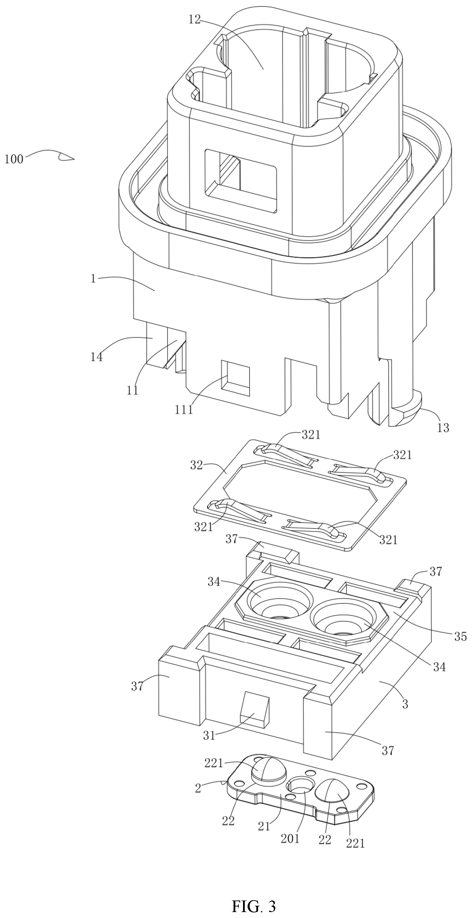

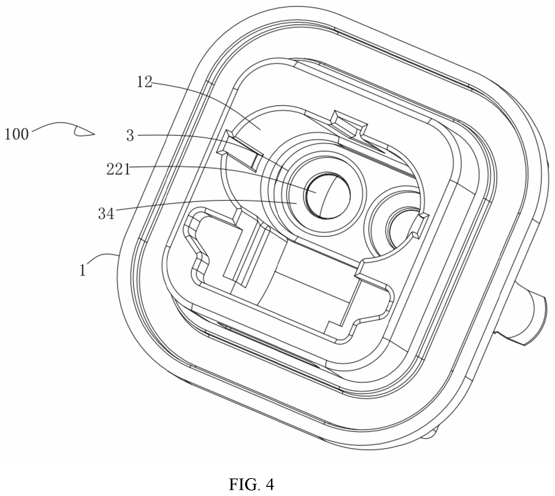

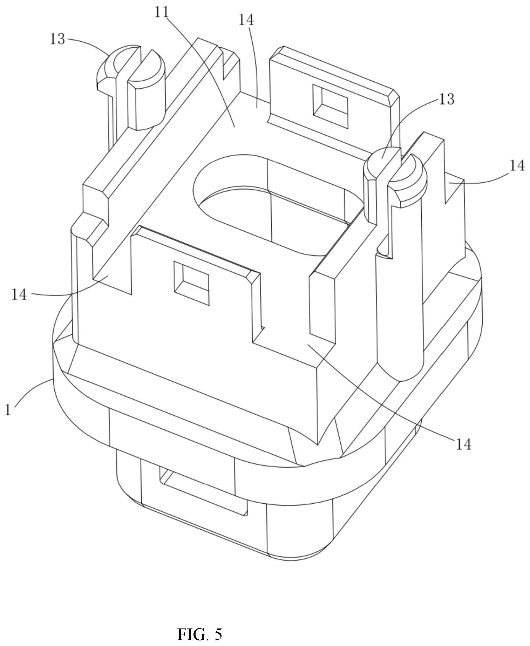

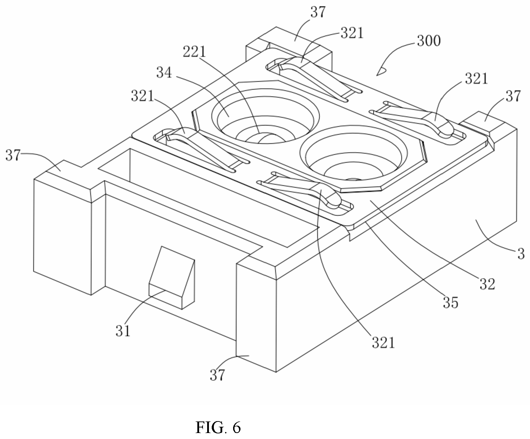

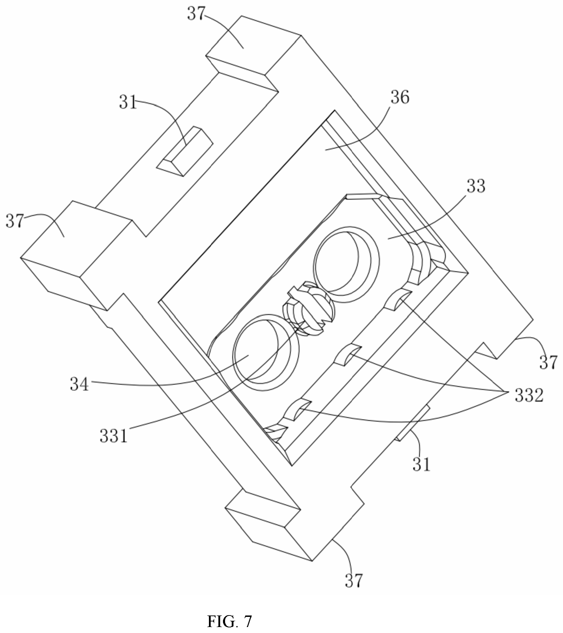

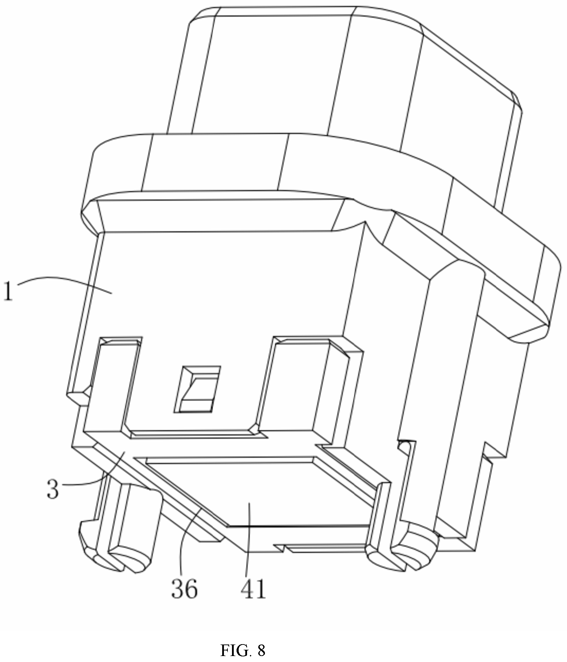

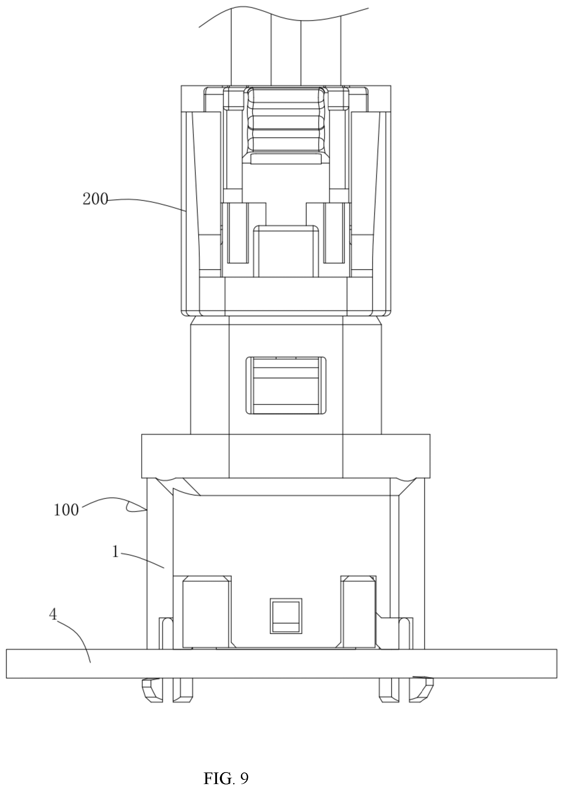

FIG. 1 to FIG. 9 show a plastic optical fiber (POF) female connector. The POF female connector 100 is mounted on a printed circuit board (PCB) 4 and used for transmitting optical signals to an optical fiber chip 41 mounted on the PCB 4. The optical fiber chip 41 receives the optical signals.

The POF female connector 100 includes an insulating seat 1 and a lens module 300.

The insulating seat 1 is provided with a mating slot 12 into which a POF male connector 200 is plugged and a mounting position 11 in communication with the mating slot 12. The lens module 300 is mounted in the mounting position 11. The lens module 300 includes a plastic optical fiber lens 2. Input ends 221 of lens bodies 22 of the plastic optical fiber lens 2 are exposed in the mating slot 12, and output ends 222 of the lens bodies 22 are exposed at a lower end of the insulating seat 1. The insulating seat 1 is mounted on the PCB 4. The output ends 222 of the lens bodies 22 are coupled to the optical fiber chip 41 mounted on the PCB 4. That is, the present disclosure is provided with no optical fiber chip 41, and no additional structure to fix the optical fiber chip is required. The present disclosure has a simple structure, only the lens bodies 22 of the plastic optical fiber lens 2 are coupled to the optical fiber chip 41, optical signals are transmitted to the optical fiber chip 41, and finally the optical fiber chip 41 receives the optical signals. Moreover, the present disclosure is particularly suitable for the scene where the optical fiber chip is welded and fixed to the PCB and only transmission of the optical signals is required.

The lens module 300 further includes a support 3. The plastic optical fiber lens 2 is fixed in the support 3. An outer side of the support 3 is provided with an inverted snap 31. An inner wall of the mounting position 11 is provided with a snap hole 111. The inverted snap 31 is snapped into the snap hole 111 and is vertically movable relative to the snap hole 111. A metal elastic sheet 32 is further arranged between the support 3 and the mounting position 11. The metal elastic sheet 32 elastically supports the support 3 relative to the insulating seat 1. The support 3 is fixed in the mounting position 11 in an elastically floatable manner. That is, the support 3 and the plastic optical fiber lens 2 fixed to the support 3 can elastically float relative to the insulating seat 1. Thus, in actual use, after the POF female connector of the present disclosure is fixedly mounted on the PCB, the plastic optical fiber lens 2 is in elastic contact with the optical fiber chip 41 on the PCB 4, thus avoiding formation of a gap between the plastic optical fiber lens and the optical fiber chip. In this way, optical signal transmission quality of the plastic optical fiber lens 2 can be ensured. In addition, damage to the plastic optical fiber lens or the optical fiber chip due to rigid contact is prevented, and the service life and quality of a product are ensured.

A specific assembly structure of the support 3 and the plastic optical fiber lens 2 is as follows:
A lower end of the support 3 is provided with a mounting groove 33. An upper end of the support 3 is provided with coupling windows 34 penetrating through the mounting groove 33. The plastic optical fiber lens 2 is mounted in the mounting groove 33. The input ends 221 of the plastic optical fiber lens 2 are exposed in the coupling windows 34, and exposed in the mating slot 12. The output ends 222 of the plastic optical fiber lens 2 are exposed to the outside. The mounting groove 33 is further internally provided with a non-circular positioning snap 331. The plastic optical fiber lens 2 is provided with a through second positioning hole 201. The positioning snap 331 penetrates through the second positioning hole 201, to be positioned on the plastic optical fiber lens 2 in a snap-fit manner. Thus, it is ensured that the plastic optical fiber lens 2 is stably mounted in the mounting groove 33. To further improve stability of the assembly structure, a plurality of pressing protrusions 332 are further formed in the mounting groove 33. The pressing protrusions 332 are pressed against a periphery of the plastic optical fiber lens 2, to limit the plastic optical fiber lens 2. In this way, the stability of the assembly structure can be improved.

The metal elastic sheet 32 is embedded in a limiting groove 35 provided in the upper end of the support 3. A plurality of elastic arms 321 protruding upward are formed on the metal elastic sheet 32. The elastic arms 321 are in contact with a bottom surface of the mounting position 11. Thus, a gap between the support 3 and the mounting position 11 can be eliminated, and meanwhile, the support 3 can be stably and elastically supported, such that the support 3 can elastically float relative to the insulating seat 1.

The plastic optical fiber lens 2 includes a base 21 and the lens bodies 22 integrally fixed to the base 21. Each of the lens bodies 22 has one input end 221 and one output end 222. The input ends 221 correspond to the output ends 222.

A lower end surface of the support 3 is further provided with an avoidance groove 36 for accommodating the optical fiber chip 41. The output ends 222 of the plastic optical fiber lens 2 are exposed in the avoidance groove 36. Thus, a light-shielding effect can be achieved, and further transmission performance of the optical signals can be improved.

A plurality of positioning bosses 13 are formed on a lower end surface of the insulating seat 1. The positioning bosses 13 are used for being embedded in and fixed to the PCB. Slit grooves 130, opened upward from bottom surfaces, of the positioning bosses 13 divide the positioning bosses 13 into first positioning columns 131 and second positioning columns 132. Snap parts 133 protruding outward are further formed on peripheries of lower ends of the second positioning columns 132. In this way, the positioning bosses can be embedded in and fixed to the PCB, and can prevent the insulating seat 1 from being accidentally separated from the PCB.

Four corners of the insulating seat 1 are provided with alignment grooves 14 penetrating through the mounting position 11. Four corners of the support 3 are all provided with alignment blocks 37. The alignment blocks 37 are embedded in the alignment grooves 14. This ensures that the support 3 is stably assembled in the mounting position 11 and an alignment effect is achieved.

In conclusion, the present disclosure is provided with no optical fiber chip 41, and no additional structure to fix the optical fiber chip is required. The present disclosure has a simple structure, only the lens bodies 22 of the plastic optical fiber lens 2 are coupled to the optical fiber chip 41, optical signals are transmitted to the optical fiber chip 41, and finally the optical fiber chip 41 receives the optical signals. Moreover, the present disclosure is particularly suitable for the scene where the optical fiber chip is welded and fixed to the PCB and only transmission of the optical signals is required.

Clearly, what are described above are merely specific embodiments of the present disclosure, and are not intended to limit the implementation scope of the present disclosure. All equivalent changes or modifications made in accordance to the structures, features and principles within the application scope of the present disclosure shall fall within the application scope of the present disclosure.

## Claims

1. A plastic optical fiber (POF) female connector, **characterized by** comprising:
an insulating seat (1) provided with a mating slot (12) into which a POF male connector is plugged and a mounting position (11) in communication with the mating slot (12); and
a lens module (300) mounted in the mounting position (11), wherein the lens module (300) comprises a plastic optical fiber lens (2), input ends (221) of lens bodies (22) of the plastic optical fiber lens (2) are exposed in the mating slot (12), and output ends (222) of the lens bodies (22) are exposed at a lower end of the insulating seat (1); and
the insulating seat (1) is mounted on a printed circuit board (PCB) (4), and the output ends (222) of the lens bodies (22) are coupled to an optical fiber chip (41) mounted on the PCB (4).

2. The POF female connector according to claim 1, **characterized in that** the lens module (300) further comprises a support (3), the plastic optical fiber lens (2) is fixed in the support (3), an outer side of the support (3) is provided with an inverted snap (31), an inner wall of the mounting position (11) is provided with a snap hole (111), the inverted snap (31) is snapped into the snap hole (111) and is vertically movable relative to the snap hole (111), a metal elastic sheet (32) is further arranged between the support (3) and the mounting position (11), the metal elastic sheet (32) elastically supports the support (3) relative to the insulating seat (1), and the support (3) is fixed in the mounting position (11) in an elastically floatable manner.

3. The POF female connector according to claim 2, **characterized in that** a lower end of the support (3) is provided with a mounting groove (33), an upper end of the support (3) is provided with coupling windows (34) penetrating through the mounting groove (33), the plastic optical fiber lens (2) is mounted in the mounting groove (33), the input ends (221) of the plastic optical fiber lens (2) are exposed in the coupling windows (34), and the output ends (222) of the plastic optical fiber lens (2) are exposed to the outside.

4. The POF female connector according to claim 3, **characterized in that** the metal elastic sheet (32) is embedded in a limiting groove (35) provided in the upper end of the support (3), a plurality of elastic arms (321) protruding upward are formed on the metal elastic sheet (32), and the elastic arms (321) are in contact with a bottom surface of the mounting position (11).

5. The POF female connector according to claim 3, **characterized in that** the mounting groove (33) is further internally provided with a non-circular positioning snap (331); and the plastic optical fiber lens (2) is provided with a through second positioning hole (201), and the positioning snap (331) penetrates through the second positioning hole (201), to be positioned on the plastic optical fiber lens (2) in a snap-fit manner.

6. The POF female connector according to claim 5, **characterized in that** a plurality of pressing protrusions (332) are further formed in the mounting groove (33), and the pressing protrusions (332) are pressed against a periphery of the plastic optical fiber lens (2), to limit the plastic optical fiber lens (2).

7. The POF female connector according to any one of claims 1 to 6, **characterized in that** the plastic optical fiber lens (2) comprises a base (21) and the lens bodies (22) integrally fixed to the base (21), each of the lens bodies (22) has one input end (221) and one output end (222), and the input ends (221) correspond to the output ends (222).

8. The POF female connector according to any one of claims 2 to 6, **characterized in that** a lower end surface of the support (3) is further provided with an avoidance groove (36) for accommodating the optical fiber chip (41), and the output ends (222) of the plastic optical fiber lens (2) are exposed in the avoidance groove (36).

9. The POF female connector according to any one of claims 1 to 6, **characterized in that** a plurality of positioning bosses (13) are formed on a lower end surface of the insulating seat (1); four corners of the insulating seat (1) are provided with alignment grooves (14) penetrating through the mounting position (11); and four corners of the support (3) are provided with alignment blocks (37), and the alignment blocks (37) are embedded in the alignment grooves (14).

10. The POF female connector according to claim 9, **characterized in that** slit grooves (130), opened upward from bottom surfaces, of the positioning bosses (13) divide the positioning bosses (13) into first positioning columns (131) and second positioning columns (132), and snap parts (133) protruding outward are further formed on peripheries of lower ends of the second positioning columns (132).
